**Europäisches Patentamt**

(19) **European Patent Office**

**Office européen des brevets**

(11) Publication number: **0 237 537 B1**

(12) # EUROPEAN PATENT SPECIFICATION

(45) Date of publication of patent specification :
**12.06.91 Bulletin 91/24**

(51) Int. Cl.⁵ : **B07C 3/08**

(21) Application number : **86905239.9**

(22) Date of filing : **25.08.86**

(86) International application number :
**PCT/DK86/00094**

(87) International publication number :
**WO 87/01311 12.03.87 Gazette 87/06**

(54) A SORTING MACHINE, IN PARTICULAR FOR SMALL PARCELS.

The file contains technical information
submitted after the application was filed and
not included in this specification

(30) Priority : **26.08.85 DK 3864/85**

(43) Date of publication of application :
**23.09.87 Bulletin 87/39**

(45) Publication of the grant of the patent :
**12.06.91 Bulletin 91/24**

(84) Designated Contracting States :
**AT BE CH DE FR GB IT LI LU NL SE**

(56) References cited :
**EP-A- 0 099 434**
**DE-B- 2 546 748**
**US-A- 3 055 486**

(73) Proprietor : **ITS-INTERN TRANSPORT SYSTEM A/S**
**Karlshoj 34**
**DK-4733 Tappernoje (DK)**

(72) Inventor : **SOLUND, Jorgen**
**Karlshoj 34**
**DK-4733 Tappernoje (DK)**

(74) Representative : **Kuhnen, Wacker & Partner**
**Schneggstrasse 3-5 Postfach 1553**
**W-8050 Freising (DE)**

## Description

This invention relates to a sorting machine, in particular for small parcels, according to the pre-characterizing part of claim 1.

Such a generic sorting machine is known from US-A-3 055 486. This document shows a bucket carrier being especially adapted for transfering granular or powdered materials for loading to unloading stations. According to the description and the Figures of US-A-3 055 486 there are shown two basic embodiments, namely according to Figures 1 to 6 and to Figures 7 to 10, respectively, thereof.

Having regard to the first embodiment according to Figs. 1 to 6 of US-A-3 055 486, upon emptying of a bucket an abutment lug extending from the bottom side of the bucket abuts against a stop lug on an activator selector shaft and one end of pins on the side of the bucket hits a vertical stop surface of a camming bar and is slidably tracked or guided on the top guide surface of the camming bar while the bucket is in its emptying position.

At the termination of emptying the bucket the pin rides on a downwardly decending portion of the surface of the camming bar and the free end of a swingable restraining arm abuts against the bucket and fits itself to an adjacent flange projection as a fulcrum contact during gravity swing return of the bucket to a free hanging condition, as the lateral pin leaves the camming bar.

Means are intended to cushion the swinging movement back to the upright position of the bucket.

Figures 7 to 10 of US-A-3 055 486 show a second embodiment of this reference. Upon emptying of the bucket a pin on each side of the bucket abuts against a forward vertical edge on an activated cam bar and as the bucket moves forward, it is initially tilted to lower the pin into alignment with a shoulder to further tilt the bucket for complete unloading. In the final upending of the bucket the pin rides on a upper surface and then down a decending terminal portion of the bar, during which the bucket turns up again under control of a pivoted restraining lever which cooperates with the trailing flange in cushioning the final swing to upright position of the bucket.

This being in short an explanation of the technical features and embodiments resulting therefrom according to US-A-3 055 486.

The pivoted bucket carrier according to US-A-3 055 486 shows in practice several characteristics, the most important ones are as follows :

First of all, the abutment lugs or pins extending from the bucket collide with the stop lug or vertical edge at the selector shaft or cam bar, respectively, wherein collision takes place with the speed of the conveyor carrying the bucket. Since the pins are used for tilting the loaded bucket and since they collide with the stationary member, the force exerted on the pins upon collision is a very high one and the risk of breaking the pins arises. All the more as the buckets are loaded and as they are intended to carry granular or powdered material, e.g. sand, gravel or the like, what is a rather heavy material, so that the moment of inertia of the buckets is very high, and thus the force exerted on the lugs or pins is also very high.

According to the second embodiment of US-A-3 055 486 the loaded bucket is tilted by a pin to a first extend and then is finally tilted by a further pin into the unloading ponsition. This makes it somehow possible to reduce the forces exerted on the two pins upon collision with the cam bar, but makes it necessary to provide at least two abutment edges one after another at said cam bar. Accordingly, from this fact again two characteristics arise, namely that upon movement of the activated cam bar in its position for tilting the bucket there appears the risk that the respective pins do not engage their respective abutment edges, this leading to damage or breakage of the respective pin or abutment edge or to an incomplete tilting of the bucket. Furthermore a considerable ling passageway of the conveyor must be used for completely tilting the bucket and for bringing it back in its upright position, so that a rather long distance between two consecutive emptying positions is necessary.

In other words, emptying and swing return of the emptied bucket in both embodiments of US-A-3 055 486 must take place over a relatively long traveling distance of the conveyor. Consequently there has to be a rather large distance between the laterally inclined discharge chutes and therefore the complete apparatus demands much space and furthermore has a poor sorting capacity if it is to be used as a sorting machine for small parcels.

Considering the above discussion of the bucket carrier according to US-A-3 055 486, it is the primary object of the present invention to provide a sorting machine, in particular for small parcels, which requires little space and has a great sorting capacity while the activation means used and their cooperation with the individual trays during emptying are simpler than in the bucket carrier according to US-A-3 055 486.

Solution of this object is achieved by the characterizing part of claim 1.

The invention will be described more fully below with reference to the drawing, in which :

Fig. 1 is a lateral view of one end of a sorting machine according to the invention ; and

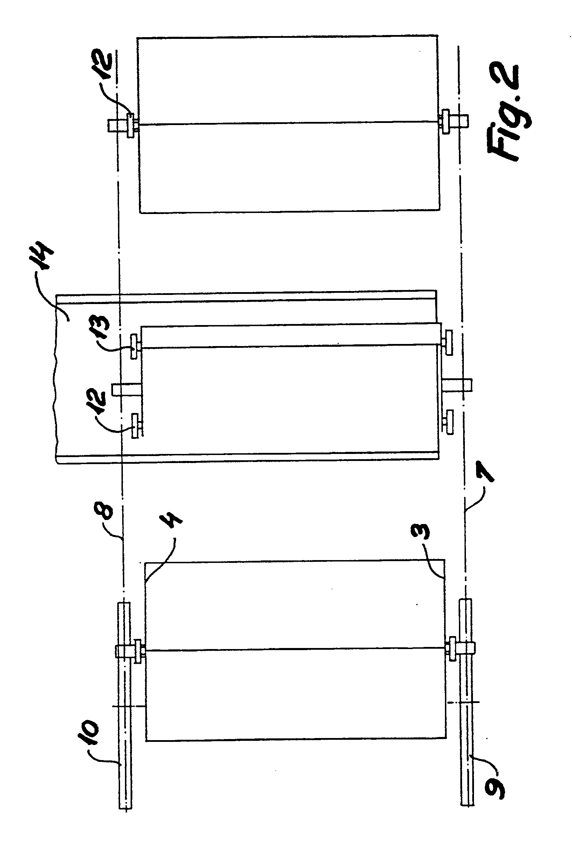

Fig. 2 is a top view, on a larger scale, of the same end of the sorting machine of the invention.

The sorting machine shown in the drawing contains a plurality of trays, 1a, 1b, 1c, 1d, 1e, 1g preferably of aluminium and with a V-shaped bottom 2 and side members 3 and 4. These trays are at both sides pivotally suspended from arms 5 which are secured at the top, at 6, to their respective ones of chains 7 and 8 driven in synchronism and by the same drive motor (not shown), said chains being indicated in the drawing in broken lines. The chains 7 and 8 preferably consist of steel wires placed around a chain wheel at each end of the sorting machine.

Since only one end of the sorting machine is shown in the drawing, only one chain wheel 9 and 10 is visible for each steel wire 7 and 8, respectively.

As mentioned, the trays are pivotally suspended from arms 5. The suspension point 11 of the trays is disposed above the centre of gravity of the trays, so that their V-shaped bottom 2 usually assumes a horizontal position.

Projections in the form of wheels 12 and 13, respectively, are secured above and below the suspension point 11 on the external side member 4.

Below the trays in both the upper and the lower run of the path, a plurality of stationary chutes 14 is placed at even intervals in a machine frame (not shown), in which a corresponding number of levers 16 is secured, said levers being pivotable about a horizontal shaft 15.

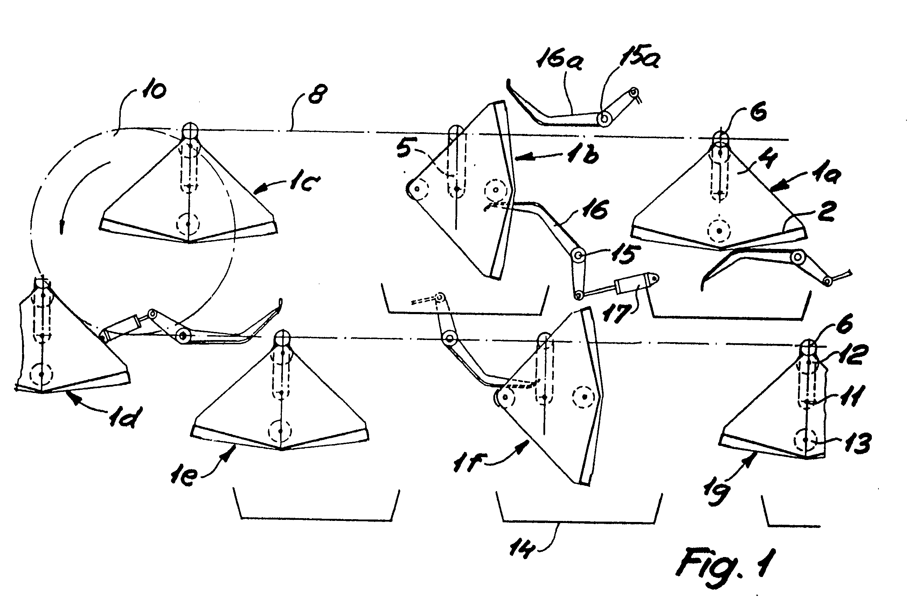

The levers 16 can be caused to assume an activated state by means of their respective pneumatic cylinders 17, during which the levers 16 associated with the upper path run are caused to engage the lower wheel 13 on each passing tray, as shown e.g. at the tray 1b in Fig. 1, and during which the levers 16 associated with the lower path run are caused to engage the upper wheel 12 on each passing tray, as shown e.g. at the tray 1f in Fig. 1. Consequently, the trays 1b and 1f in question are pivoted to empty their contents onto the chutes 14 disposed below.

Further, in an additional embodiment of the invention, a plurality of levers 16a (only one is visible in the drawing) is provided, said levers 16a being pivotable about a horizontal shaft 15a and, seen in a vertical direction, disposed at the opposite side of the pivot axis 11 of the tray with respect to the first-mentioned levers 16, so that the trays can optionally be emptied both in the upper and the lower run of the path at one or the other side, depending upon whether a lever 16 or a lever 16a is activated and engages one or the other of the wheels 12 and 13.

When the levers 16 or 16a are not activated, the trays just pass unaffected, as shown in respect of the other trays 1a, 1e and 1g.

Feeding to the conveyor is effected from a feeding unit (not shown), which may be placed in any desired stationary position above the upper or lower run of the path, and the contents of the trays are automatically controlled for emptying into a chute 14 determined by an identification code on each parcel.

Activation means and projections may be arranged at both sides of the trays so that the trays are hit by activation means simultaneously at each side.

## Claims

1. A sorting machine, in particular for small parcels, comprising : trays (1a, 1b....) which are moved in an endless path extending in a vertical plane in such a manner that the trays face upwardly both in the upper and the lower run of the path, said trays being pivotally suspended between two parallel synchronously driven conveyors (7, 8) ; a plurality of stationary unloading means (14), which are provided below the upper and/or lower run of the path ; and, for each unloading means (14), a selectively controllable activation means (15, 16, 17) which is adapted, in its activated state, to be caused to engage at least one projection protruding outwardly from a passing tray such that said tray is pivoted for emptying its contents onto the associated unloading means (14), characterized in that

at least one side of the left-hand side or right-hand side, respectively, seen in travelling direction of each tray (1a, 1b,...) carries two projections in form of wheels (12, 13) which are placed above and below the pivot axis (11) of the tray, respectively, in the tray equilibrium position, and which are adapted to be caused to engage the activation means being disposed above and below the pivot axis (11) of the tray, respectively, and consisting of a lever (16) which is mounted for pivotal movement ment about a horizontal shaft (15) in the sorting machine.

2. The sorting machine according to claim 1, characterized in that an additional selectively controllable activation means (16a) is provided for each stationary unloading means (14), said additional activation means (16a) likewise consisting of a lever mounted for pivotal movement about a horizontal shaft (15a) in the sorting machine, said additional activation means being disposed at the opposite side of the pivot axis (11) of the tray (1a, 1b,...) with respect to the first mentioned activation means (15, 16, 17).

## Ansprüche

1. Eine Sortiervorrichtung, insbesondere für kleine Päckchen, mit : Schalen (1a, 1b,...), welche in einem Endlospfad bewegt werden, der sich in einer vertikalen Ebene derart erstreckt, daß die Schalen sowohl in dem oberen als auch dem unteren Verlauf des Pfades nach oben weisen, wobei die Schalen schwenkbeweglich zwischen zwei parallelen synchron angetriebenen Fördermitteln (7, 8) aufgehängt sind ; einer Mehrzahl von ortsfesten Entladevorrichtungen (14), welche unterhalb des oberen und/oder unteren Verlauf des Pfades angeordnet sind ; und, für jede Entladevorrichtung (14), eine wahlweise steuerbare Betätigungsvorrichtung (15, 16, 17), welche in der Lage ist, in ihrem aktivierten Zustand mit wenigstens einem Vorsprung in Anlage zu geraten, der sich von einer vorüberlaufenden Schale nach außen erstreckt, so daß besagte Schale verschwenkt wird, um ihren Inhalt auf die zugehörige Entladevorrichtung (14) zu entleeren, dadurch gekennzeichnet, daß

wenigstens eine Seite der in Förderrichtung einer jeden Schale (1a, 1b,...) linken oder rechten Seite zwei Vorsprünge in Form von Rädern (12, 13) trägt, welche oberhalb bzw. unterhalb der Schwenkachse (11) der Schale in deren Gleichgewichtslage angeordnet sind und welche in der Lage sind, die Betätigungsvorrichtung oberhalb bzw. unterhalb der Schwenkachse (11) der Schale zu berühren, und welche aus einem Hebel (16) bestehen, der angeordnet ist für eine Schwenkbewegung um eine horizontale Welle (15) in der Sortiervorrichtung.

2. Die Sortiervorrichtung nach Anspruch 1, dadurch gekennzeichnet, daß zusätzlich wahlweise steuerbare Betätigungsvorrichtungen (16a) vorgesehen sind für jede ortsfeste Enladevorrichtung (14), wobei die zusätzlichen Betätigungsvorrichtungen (16a) auf ähnliche Weise aus einem Hebel bestehen, der für eine Schwenkbewegung um eine horizontale Welle (15a) in der Sortiervorrichtung angeordnet ist, wobei die zusätzlichen Betätigungsvorrichtungen auf der gegenüberliegenden Seite der Schwenkachse (11) der Schale (1a, 1b,...) bezüglich der zuerste erwähnten Betätigungsvorrichtung (15, 16, 17) angeordnet sind.

## Revendications

1. Machine de tri, en particulier pour petits colis, comportant : des bacs (1a, 1b,...) qui sont déplacés le long d'un circuit sans fin s'étendant dans un plan vertical de manière que les bacs soient tournés vers le haut en parcourant les deux brins supérieur et inférieur du circuit, lesdits bacs étant suspendus de façon pivotante entre deux transporteurs parallèles (7, 8) entraînés en synchronisme ; plusieurs moyens fixes de déchargement (14), qui sont prévus au-dessous du brin supérieur et/ou du brin inférieur du circuit ; et, pour chaque moyen (14) de déchargement, un moyen d'actionnement (15, 16, 17) pouvant être commandé sélectivement, qui est destiné, dans son état actionné, à être amené à porter contre au moins une saillie dépassant vers l'extérieur d'un bac passant afin que ledit bac bascule pour vider son contenu sur le moyen de déchargement associé (14), caractérisée en ce qu'au moins l'un des côtés gauche et droit, respectivement, vus dans la direction de déplacement de chaque bac (1a, 1b,...), porte deux saillies sous la forme de roues (12, 13) qui sont placées au-dessus et au-dessous de l'axe de pivotement (11) du bac, respectivement, dans la position d'équilibre du bac, et qui sont destinées à être amenées à porter contre les moyens d'actionnement disposés au-dessus et au-dessous de l'axe de pivotement (11) du bac, respectivement, et consistant en un levier (16) qui est monté de façon à pouvoir pivoter autour d'un axe horizontal (15) dans la machine de tri.

2. Machine de tri selon la revendication 1, caractérisée en ce qu'un moyen d'actionnement supplémentaire (16a), pouvant être commandé sélectivement, est prévu pour chaque moyen fixe (14) de déchargement, ledit moyen d'actionnement supplémentaire (16a) consistant de la même manière en un levier monté de façon à pouvoir pivoter autour d'un axe horizontal (15a) dans la machine de tri, ledit moyen d'actionnement supplémentaire étant disposé sur le côté opposé de l'axe de pivotement (11) du bac (1a, 1b,...) par rapport au premier moyen d'actionnement cité (15, 16, 17).

Fig. 1

Fig.2